(19) Europäisches Patentamt
European Patent Office
Office européen des brevets

(11) **EP 1 997 650 B1**

(12) **EUROPEAN PATENT SPECIFICATION**

(45) Date of publication and mention
of the grant of the patent:
**30.12.2009 Bulletin 2009/53**

(51) Int Cl.:
***B60C 9/20*** (2006.01)

(21) Application number: **08009947.6**

(22) Date of filing: **30.05.2008**

(54) **Pneumatic tire**

Luftreifen

Pneu

(84) Designated Contracting States:
**DE FR**

(30) Priority: **01.06.2007 JP 2007147362**

(43) Date of publication of application:
**03.12.2008 Bulletin 2008/49**

(73) Proprietor: **The Yokohama Rubber Co., Ltd.**
**Minato-ku**
**Tokyo 105-8685 (JP)**

(72) Inventor: **Ozaki, Makoto**
**Hiratsuka-shi**
**Kanagawa 254-8601 (JP)**

(74) Representative: **HOFFMANN EITLE**
**Patent- und Rechtsanwälte**
**Arabellastrasse 4**
**81925 München (DE)**

(56) References cited:
**EP-A- 0 412 777      EP-A- 0 571 204**
**EP-A- 1 495 880      WO-A-94/14625**
**DE-A1- 10 207 417    US-A- 4 722 381**

**Description**

BACKGROUND OF THE INVENTION

The present invention relates to a pneumatic tire with a polytetramethylene adipamide fiber cord used in a belt reinforcing layer. Further specifically, the present invention relates to a pneumatic tire improved in a performance against a flat spot with a high-speed durability desirably maintained.

In a pneumatic tire, a belt reinforcing layer which is formed of a reinforcing cord wound in a circumferential direction of the tire is disposed on an outer circumferential side of a belt layer buried in a tread portion. It is known that burying such a belt reinforcing layer in the tread portion suppresses the belt layer from being lifted, improving the high-speed durability.

Meanwhile, when a vehicle is parked for a long period of time after a high-speed driving, a flat spot may be formed in the tire in some cases. If the flat spot is formed, the uniformity of the tire is deteriorated, and road noises and vibrations are increased. A cause of the flat spot formation includes a creep set (phenomenon in which the deformation is fixed) in constituent members of the tire. Although varied with a tire size, the contribution of the belt reinforcing layer among the constituent members of the tire to the flat spot is considerably large.

Conventionally, various organic fiber cords are used as the reinforcing cord of the belt reinforcing layer, and particularly, a nylon 66 fiber cord is used widely (see, for example, Japanese patent application Kokai publication No. Hei 6-24208). Nevertheless, a creep set strain in the nylon 66 fiber cord is large. A pneumatic tire using the nylon 66 fiber cord in the belt reinforcing layer has a problem that the flat spot is likely to be formed therein.

Alternatively, it is proposed that a nylon 46 fiber cord and the like be used as a reinforcing cord of a belt reinforcing layer. Nevertheless, these fiber cords are not to have an effect of improving a performance against the flat spot (see, for example, Japanese patent application Kokai publication Nos. Hei 3-287402, Sho 61-129303, Hei 5-286304).

Document EP-A-1 495 880 discloses the features of the preamble of claim 1.

SUMMARY OF THE INVENTION

An object of the present invention is to provide a pneumatic tire improved in a performance against a flat spot with a high-speed durability desirably maintained.

In order to achieve the object, the pneumatic tire according to the present invention includes: a tread portion; a belt layer buried in the tread portion; and a belt reinforcing layer which is disposed on an outer circumferential side of the belt layer, and which is composed of an organic fiber cord wound in a circumferential direction of the tire. In this pneumatic tire, 60% or more of the total count of the organic fiber cord composing the belt reinforcing layer is a polytetramethylene adipamide fiber cord. A creep set strain of the polytetramethylene adipamide fiber cord is 2.5% or less. A twist coefficient K of the polytetramethylene adipamide fiber cord satisfies a condition of $600 \leq K \leq 1700$, and is represented by the following formula (1):

$$K = T \times \sqrt{D} \ldots (1)$$

where T is the twist number (turn/10 cm) of the cord, and D is the total fineness (dtex) of the cord.

According to the present invention, the polytetramethylene adipamide fiber cord is used as the organic fiber cord composing the belt reinforcing layer. The polytetramethylene adipamide fiber cord has the twist coefficient K and the creep set strain as described above. Thereby, the belt reinforcing layer improves the performance against the flat spot, while desirably maintaining the high-speed durability.

In the present invention, the creep set strain is measured as follows. Specifically, a cord piece is sampled from the belt reinforcing layer of the tire. The cord piece is hung with a weight of 1/20 (g) of the total fineness (dtex) thereby to measure a sample length L0. The cord piece of the sample length L0 is applied with a load of 1.0 cN/dtex, and left to stand for 20 minutes at 80°C. Then, the load is released. Subsequently, the cord piece is hanged with the weight of 1/20 (g) of the total fineness (dtex) to measure a sample length L1. Thus, a creep set strain CI is calculated as $(L1-L0)/L0 \times 100$ (%).

According to the present invention, a permanent tensile strain of a coating rubber for the belt reinforcing layer is preferably 3.0% or less. By using the coating rubber having such a small permanent tensile strain together, it is possible to further improve the performance against the flat spot.

In the present invention, the permanent tensile strain is measured as follows. Specifically, a rubber piece is sampled from the coating rubber for the belt reinforcing layer of the tire to measure a sample length L2 of the rubber piece. The rubber piece of the sample length L2 is applied with 25% of an extension strain, and left to stand for 1 hour at 70°C, and then another 22 hours at 25°C. Subsequently, the rubber piece is released from the strain, and a sample length L3 after 60 minutes is measured. Thus, a permanent tensile strain is obtained from (L3-L2)/L3×100 (%).

Furthermore, according to the present invention, it is preferable that the twist coefficient K of the polytetramethylene adipamide fiber cord satisfy a condition of 700≤K≤1100, and concurrently that the total decitex number of the polytetramethylene adipamide fiber cord included in every 50-mm width of the belt reinforcing layer be from 80,000 to 150, 000 inclusive. In this manner, by decreasing the twist coefficient K to increase the elasticity of the fiber cord, and concurrently by decreasing the number of the cords per unit width, it is possible to further improve the performance against the flat spot, while desirably maintaining the high-speed durability.

BRIEF DESCRIPTION OF THE DRAWING

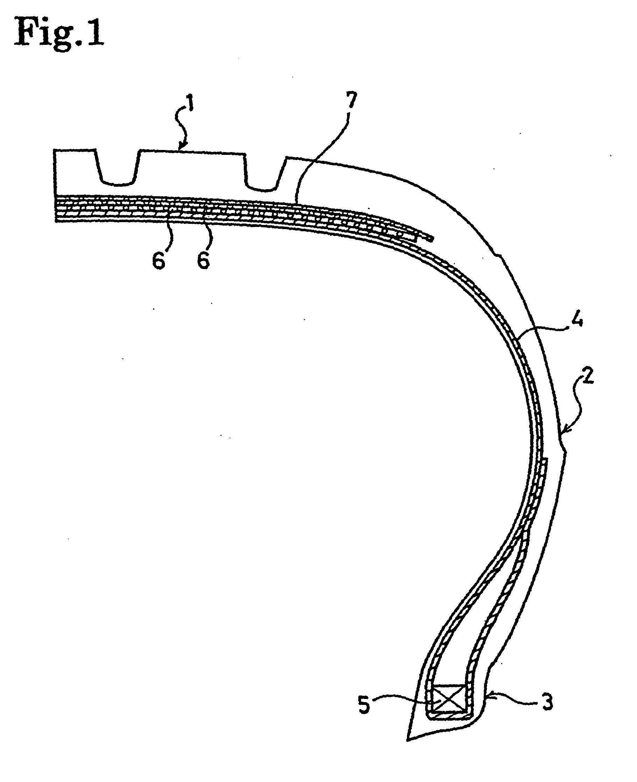

Fig. 1 is a semi-sectional view of a meridian showing a pneumatic tire according to an embodiment of the present invention.

DETAILED DESCRIPTION OF THE PREFERRED EMBODIMENT

Hereinafter, description will be given of a configuration of the present invention in detail with reference to the accompanying drawing. Fig. 1 shows a pneumatic tire according to an embodiment of the present invention. Reference numeral 1 denotes a tread portion, reference numeral 2 denotes a side wall portion, and reference numeral 3 denotes a bead portion. A carcass layer 4 is bridged between a right-and-left pair of bead portions 3. An end portion of the carcass layer 4 is folded from the inside to the outside of the tire so as to surround a bead core 5. Multiple belt layers 6 are buried in the tread portion 1, and disposed on the outer circumferential side of the carcass layer 4. These belt layers 6 are disposed in a way that steel cords of each of the belt layers 6 incline with respect to a circumferential direction of the tire, and that the steel cords of one of the belt layers 6 cross those of the other one of the belt layers 6.

In the pneumatic tire, a belt reinforcing layer 7 is disposed on the outer circumferential side of the belt layers 6. The belt reinforcing layer 7 is composed of an organic fiber cord that is wound in the circumferential direction of the tire. It is desirable that the belt reinforcing layer 7 have a jointless structure in which a strip member is continuously wound at an angle of approximately 0° relative to the circumferential direction of the tire. The strip member is formed of at least one fiber cord arranged in parallel, and then is covered with a rubber.

A polytetramethylene adipamide fiber cord (nylon 46 fiber cord) is used as the organic fiber cord composing the belt reinforcing layer 7. It is desirable that all the organic fiber cords composing the belt reinforcing layer 7 be the polytetramethylene adipamide fiber cord. Nevertheless, if 60% or more of the total count of the organic fiber cords composing the belt reinforcing layer 7 are the polytetramethylene adipamide fiber cord, it suffices to obtain an effect of improving the performance against the flat spot.

When the polytetramethylene adipamide fiber cord and other organic fiber cords are used in combination, the polytetramethylene adipamide fiber cord should be disposed in a central area (central contact patch) of the belt reinforcing layer 7 in a width direction thereof. As the organic fiber cords to be disposed in an outer area of the belt reinforcing layer 7 in the width direction, it is possible to use a fiber cord of polyethylene terephthalate (PET), polyethylene naphthalate (PEN), rayon, polyolefin ketone (POK), aromatic polyamide, aliphatic polyamide, or the like as well as a composite cord formed by twisting a first twisted yarn of aromatic polyamide with a first twisted yarn of aliphatic polyamide.

The polytetramethylene adipamide fiber cord is designed to have a twist coefficient K represented by the following formula (1) within a range from 600 to 1700 inclusive. Moreover, the total fineness of the polytetramethylene adipamide fiber cord should be set within a range from 940 dtext to 2800 dtex.

$$K = T \times \sqrt{D} \quad \ldots (1)$$

where T is the twist number (turn/10 cm) of the cord, and D is the total fineness (dtex) of the cord.

Note that, the twist number means the number of first twistings in the case of single twisting, and means the number of second twistings in the case of ply twisting.

By setting the twist coefficient K of the polytetramethylene adipamide fiber cord within the above range, it is possible to improve the performance against the flat spot. When the twist coefficient K is lower than 600, the load durability is decreased. In contrast, when the twist coefficient is greater than 1700, the elasticity of the code is lowered to deteriorate the high-speed durability, and the creep set strain is increased to deteriorate the performance against the flat spot.

Furthermore, it is preferably that the twist coefficient K of the polytetramethylene adipamide fiber cord be within a range from 700 to 1100 inclusive, and concurrently that the total decitex number of the polytetramethylene adipamide fiber cord included in every 50-mm width of the belt reinforcing layer 7 be from 80,000 to 150, 000 inclusive. For example, in the case where the number of the cords in every 50-mm width of the belt reinforcing layer 7 is 50, and where the total fineness of the fiber cords is 1880 dtex, the total decitex number is 94, 000. In this manner, when the elasticity of the fiber cords is increased by decreasing the twist coefficient K, and concurrently when the number of the cords per unit width is small, it is possible to further improve the performance against the flat spot while desirably maintaining the high-speed durability. In this respect, if the total decitex number is less than 80, 000, the high-speed durability is insufficient. In contrast, if the total decitex number is greater than 150,000, the effect of improving the performance against the flat spot is insufficient.

The polytetramethylene adipamide fiber cord is designed so that a creep set strain may be 2.5% or less. By using the polytetramethylene adipamide fiber cord having such a small creep set strain, it is possible to improve the performance against the flat spot. In this respect, if the creep set strain is greater than 2.5%, the effect of improving the performance against the flat spot becomes insufficient.

In order to make the creep set strain of the polytetramethylene adipamide fiber cord be 2.5% or less, it is preferable to satisfy the condition of the twist coefficient K to be within the above range, and concurrently to set the cord treatment conditions as follows. Specifically, as an adhesive during a dipping treatment, resorcin formaldehyde latex (RFL) should be used. First, fiber cords adhered with RFL should be dried within a temperature range from 100°C to 150°C inclusive. Then, the fiber cords are subjected to a tension treatment of applying a tension of 0.8 cN/dtex to 1.8 cN/dtex inclusive within a temperature range from 210°C to 235°C inclusive for one minute. Furthermore, the fiber cords are subjected to a tension treatment of applying a tension of 0. 5 cN/dtex to 1.0 cN/dtex inclusive within a temperature range from 210°C to 235°C inclusive for one minute. Thereby, it is possible to obtain a polytetramethylene adipamide fiber cord having a creep set strain of 2.5% or less. Incidentally, as the tension in the tension treatment is increased, the creep set strain is decreased. The tension treatment duration is appropriately selected within a range of 60 seconds to 180 seconds.

In the above-described pneumatic tire, a coating rubber for the belt reinforcing layer 7 preferably has a permanent tensile strain of 3.0% or less. By using the belt reinforcing layer 7 together with the coating rubber having a small permanent tensile strain, it is possible to further improve the performance against the flat spot. In this respect, if the permanent tensile strain is greater than 3.0%, the effect of improving the performance against the flat spot becomes insufficient.

Examples of a rubber ingredient of the rubber composition material having a permanent tensile strain of 3.0% or less include natural rubbers (NR), isoprene rubbers (IR), styrene butadiene rubbers (SBR) and butadiene rubbers (BR). Particularly, NR, IR and BR are preferably used. The amount of sulfur to be blended is preferably from 2.0 phr to 5.0 phr inclusive, and further preferably from 2.5 phr to 3.5 phr inclusive. The amount of carbon black to be blended is preferably from 40 phr to 80 phr inclusive, and further preferably from 40 phr to 65 phr inclusive. The iodine absorption number of the carbon black to be used is preferably from 20 g/kg to 100 g/kg inclusive, and further preferably from 20 g/kg to 50 g/kg inclusive. Moreover, the DBP absorption number of the carbon black to be used is preferably from $60 \times 10^{-5}$ m$^3$/kg to $140 \times 10^{-5}$ m$^3$/kg inclusive. The CTAB surface area is preferably from $30 \times 10^3$ m$^2$/kg to $100 \times 10^3$ m$^2$/kg inclusive, and further preferably from $30 \times 10^3$ m$^2$/kg to $70 \times 10^3$ m$^2$/kg inclusive.

Hereinabove, the description has been given of the preferred embodiment of the present invention in detail. However, it should be understood that various modifications, alternations, and substitutions can be made without departing the spirit and scope of the present invention described in the accompanying scope of claims.

EXAMPLES

Various different pneumatic tires of Conventional Example, Examples 1 to 6, and Comparative Examples 1 to 4 were manufactured. Each tire had a tire size of 225/45R17, and was provided with a belt reinforcing layer on the outer circumferential side of a belt layer buried in a tread portion. The belt reinforcing layer is composed of an organic fiber cord wound in the circumferential direction of the tire. Table 1 and Table 2 show characteristics (material, twist structure, twist coefficient and creep set strain) of the organic fiber cord composing the belt reinforcing layer, a permanent tensile strain of a coating rubber for the belt reinforcing layer, and a total decitex number of the organic fiber cord included in every 50-mm width of the belt reinforcing layer. The creep set strain was adjusted according to the cord treatment conditions. In Table 1 and Table 2, "66N" means polyhexamethylene adipamide (nylon 66), and "46N" means polytetramethylene adipamide (nylon 46).

The performance against the flat spot and the high-speed durability of these test tires were evaluated by the following methods, and the results were also shown in Table 1 and Table 2.

Performance against the flat spot:

Firstly, a radial force variation (RFV) of each test tire was measured in accordance with JASO C607 "Test Procedures for Automobile Tire Uniformity". Then, the tire was used for preliminary run at a speed of 150 km/h for 30 minutes, and the drum was stopped for an hour with the load being applied. Subsequently, the RFV was measured again to calculate the difference in RFVs before and after the preliminary running. The difference was used as the evaluation index. The evaluation result was represented by an index on the basis of Conventional Example as 100. The smaller the index value is, the more excellent the performance against the flat spot is, which means that the flat spot is hard to be formed.

High-speed durability:

The high-speed durability test as set forth in JIS D4230 was conducted with a drum test machine. Then, the running distance until the tire was ruptured was determined, while the speed was increased by 10 km/h every 30 minutes. The evaluation result was represented by an index on the basis of Conventional Example as 100. The larger index value is, the more excellent the high-speed durability is.

[Table 1]

|  | Conventional Example | Example 1 | Example 2 | Example 3 | Example 4 | Example 5 | Example 6 |
|---|---|---|---|---|---|---|---|
|  | Entire area | Entire area | Entire area | Entire area | Entire area | Entire area | Entire area |
| Material | 66N | 46N | 46N | 46N | 46N | 46N | 46N |
| Twist structure | 940 dtex/2 | 940 dtex/2 | 940 dtex/2 | 940 dtex/2 | 940 dtex/2 | 940 dtex/2 | 940 dtex/2 |
| Twist coefficient | 1600 | 1600 | 1600 | 1600 | 1600 | 1600 | 1000 |
| Creep set strain (%) | 3.4 | 2.4 | 2.1 | 1.8 | 1.8 | 1.8 | 1.2 |
| Permanent tensile strain (%) of coating rubber | 5.0 | 5.0 | 5.0 | 5.0 | 1.5 | 0.9 | 0.9 |
| Total decitex number per 50-mm width | 131600 | 131600 | 131600 | 131600 | 131600 | 131600 | 94000 |
| Performance against flat spot (index) | 100 | 89 | 86 | 82 | 74 | 70 | 62 |
| High-speed durability (index) | 100 | 100 | 105 | 110 | 110 | 110 | 110 |

[Table 2]

|  | Comparative Example 1 | Comparative Example 2 | Comparative Example 3 (46N=50%) | | Comparative Example 4 |
|---|---|---|---|---|---|
|  | Entire area | Entire area | Central area | Outer area | Entire area |
| Material | 46N | 46N | 46N | 66N | 66N |
| Twist structure | 940 dtex/2 | 940 dtex/2 | 940 dtex/2 | 940 dtex/2 | 940 dtex/2 |
| Twist coefficient | 1600 | 1800 | 1600 | 1600 | 1000 |
| Creep set strain (%) | 3.0 | 3.3 | 2.4 | 3.4 | 2.4 |

(continued)

| | Comparative Example 1 | Comparative Example 2 | Comparative Example 3 (46N=50%) | | Comparative Example 4 |
|---|---|---|---|---|---|
| | Entire area | Entire area | Central area | Outer area | Entire area |
| Permanent tensile strain (%) of coating rubber | 5.0 | 5.0 | 5.0 | 5.0 | 5.0 |
| Total decitex number per 50-mm width | 131600 | 131600 | 131600 | 131600 | 131600 |
| Performance against flat spot (index) | 95 | 96 | 98 | | 96 |
| High-speed durability (index) | 95 | 95 | 100 | | 103 |

As apparent from these Table 1 and Table 2, for the tires of Examples 1 to 6, the performance against the flat spot was improved with the high-speed durability desirably maintained in comparison with those of Conventional Example. Particularly, for the tires of Examples 4 to 6, the coating rubbers used for the belt reinforcing layers had a small permanent tensile strain, and accordingly a significant effect of improving the performance against the flat spot was obtained. Furthermore, with respect to the tire of Example 6, the polytetramethylene adipamide fiber cord had a low twist coefficient, and concurrently the total decitex number of the polytetramethylene adipamide fiber cord included in every 50-mm width of the belt reinforcing layer was comparatively small. Accordingly, the effect of improving the performance against the flat spot was significant.

On the other hand, with respect to the tire of Comparative Example 1, although the polytetramethylene adipamide fiber cord was used as the belt reinforcing layer, the creep set strain was too large. Accordingly, little effect of improving the performance against the flat spot was obtained, and the high-speed durability was inferior to that in Conventional Example. With respect to the tire of Comparative Example 2, although the polytetramethylene adipamide fiber cord was used as the belt reinforcing layer, the twist coefficient and also the creep set strain were too large. Accordingly, little effect of improving the performance against the flat spot was obtained, and the high-speed durability was inferior to that in Conventional Example. With respect to the tire of Comparative Example 3, the polytetramethylene adipamide fiber cord was used as the belt reinforcing layer; however, the amount used was too small. Accordingly, the obtained effect of improving the performance against the flat spot was insufficient. With respect to the tire of Comparative Example 4, the polyhexamethylene adipamide fiber cord was used as the belt reinforcing layer as in Conventional Example, and the twist coefficient was made small to decrease the creep set strain. Nevertheless, the obtained effect of improving the performance against the flat spot was insufficient.

**Claims**

1. A pneumatic tire comprising:

   a tread portion;
   a belt layer buried in the tread portion; and
   a belt reinforcing layer which is disposed on an outer circumferential side of the belt layer, and which is composed of an organic fiber cord wound in a circumferential direction of the tire, **characterized in that**
   60% or more of the total count of the organic fiber cord composing the belt reinforcing layer is a polytetramethylene adipamide fiber cord,
   a creep set strain of the polytetramethylene adipamide fiber cord is 2.5% or less, and
   a twist coefficient K of the polytetramethylene adipamide fiber cord satisfies a condition of $600 \leq K \leq 1700$, and is represented by the following formula (1):

$$K=T\times\sqrt{D}...(1)$$

wherein T is the twist number (turn/10 cm) of the cord, and
D is the total fineness (dtex) of the cord.

2.  The pneumatic tire according to claim 1, wherein a permanent tensile strain of a coating rubber for the belt reinforcing layer is 3.0% or less.

3.  The pneumatic tire according to claim 2, wherein the coating rubber for the belt reinforcing layer includes: at least one rubber ingredient selected from the group consisting of natural rubber, isoprene rubber, styrene butadiene rubber and butadiene rubbers; sulfur of 2.0 phr to 5.0 phr inclusive; and carbon black of 40 phr to 80 phr inclusive.

4.  The pneumatic tire according to claim 3, wherein the iodine absorption number of the carbon black is from 20 g/kg to 100 g/kg inclusive.

5.  The pneumatic tire according to claim 3, wherein the DBP absorption number of the carbon black is from $60\times10^{-5}$ $m^3$/kg to $140\times10^{-5}$ $m^3$/kg inclusive.

6.  The pneumatic tire according to claim 3, wherein the CTAB surface area of the carbon black is from $30\times10^3$ $m^2$/kg to $100\times10^3$ $m^2$/kg inclusive.

7.  The pneumatic tire according to claim 1, wherein the total fineness (dtex) of the polytetramethylene adipamide fiber cord is from 940 dtex to 2800 dtex inclusive.

8.  The pneumatic tire according to any one of claims 1 to 7, wherein
    the twist coefficient K of the polytetramethylene adipamide fiber cord satisfies a condition of 700≤K≤1100, and concurrently,
    the total decitex number of the polytetramethylene adipamide fiber cord included in every 50-mm width of the belt reinforcing layer is from 80,000 to 150,000 inclusive.

**Patentansprüche**

1.  Pneumatischer Reifen, der umfasst:

    einen Laufflächenabschnitt;
    eine Gürtelschicht, die in dem Laufflächenabschnitt verborgen ist; und
    eine Gürtelverstärkungsschicht, die auf einer Außenumfangsseite der Gürtelschicht angeordnet ist, und die aus einer Schnur aus organischen Fasern zusammengesetzt ist, die in einer Umfangsrichtung des Reifens gewickelt ist,
    **dadurch gekennzeichnet, dass**
    60 % oder mehr der Gesamtzahl der Schnur aus organischen Fasern, welche die Gürtelverstärkungsschicht aufbaut, eine Schnur aus Polytetramethylenadipamidfasern ist,
    eine Kriechdehnung der Schnur aus Polytetramethylenadipamidfasern 2,5 % oder weniger beträgt und
    ein Verdrillungskoeffizient $K$ der Schnur aus Polytetramethylenadipamidfasern eine Bedingung $600 \leq K \leq 1700$ erfüllt, und durch die folgende Formel (1) dargestellt wird:

$$K = T\sqrt{D} \quad ... \quad (1)$$

    wobei T die Verdrillungszahl (Umdrehung/10 cm) der Schnur und D der Gesamtfeinheitsgrad (dtex) der Schnur ist.

2.  Pneumatischer Reifen nach Anspruch 1, bei dem eine permanente Zugbelastung eines Beschichtungsgummis für die Gürtelverstärkungsschicht 3,0 % oder weniger beträgt.

3. Pneumatischer Reifen nach Anspruch 2, bei dem der Beschichtungsgummi für die Gürtelverstärkungsschicht enthält:

   wenigstens einen Gummibestandteil, der aus der Gruppe ausgewählt ist, die aus natürlichem Gummi, Isoprengummi, Styrenbutadiengummi und Butadiengummi besteht; Schwefel von 2,0 phr bis 5,0 phr inklusive; und Ruß von 40 phr bis 80 phr inklusive.

4. Pneumatischer Reifen nach Anspruch 3, bei dem die Jodabsorptionszahl des Rußes sich im Bereich von 20 g/kg bis 100 g/kg inklusive befindet.

5. Pneumatischer Reifen nach Anspruch 3, bei dem die DBP-Absorptionszahl des Rußes sich im Bereich von 60 x $10^{-5}$ m$^3$/kg bis 140 x $10^{-5}$ m$^3$/kg inklusive befindet.

6. Pneumatischer Reifen nach Anspruch 3, bei dem der CTAB-Oberflächenbereich des Rußes sich im Bereich von 30 x $10^3$ m$^2$/kg bis 100 x $10^3$ m$^2$/kg inklusive befindet.

7. Pneumatischer Reifen nach Anspruch 1, bei dem der Gesamtfeinheitsgrad (dtex) der Schnur aus Polytetramethylenadipamidfasern sich im Bereich von 940 dtex bis 2800 dtex inklusive befindet.

8. Pneumatischer Reifen nach einem der Ansprüche 1 bis 7, bei dem der Verdrillungskoeffizient $K$ der Schnur aus Polytetramethylenadipamidfasern eine Bedingung $700 \leq K \leq 1100$ erfüllt, und gleichzeitig, die Gesamtdecitexzahl der Schnur aus Polytetramethylenadipamidfasern, die in alle 50-mm Breite der Gürtelverstärkungsschicht enthalten ist, sich im Bereich von 80.000 bis 150.000 inklusive befindet.

**Revendications**

1. Bandage pneumatique comprenant:

   une portion de bande de roulement;
   une nappe d'armature noyée dans la portion de bande de roulement; et
   une couche de renforcement d'armature qui est disposée sur un côté circonférentiel externe de la nappe d'armature, et qui est constituée d'une corde de fibres organiques enroulée dans une direction circonférentielle du bandage; **caractérisé en ce que**
   60% ou plus du compte total de la corde de fibres organiques composant la couche de renforcement d'armature est une corde en fibres de polytétraméthylène adipamide,
   une déformation réglée de fluage de la corde en fibres de polytétraméthylène adipamide est de 2,5% ou moins, et
   un coefficient de torsion K de la corde en fibres de polytétraméthylène adipamide satisfait à une condition de $600 \leq K \leq 1700$, et est représenté par la formule suivante (1):

$$K = T \times \sqrt{D} \dots (1)$$

   où T est le nombre de torsions (tour / 10 cm) de la corde, et
   D est la finesse totale (dtex) de la corde.

2. Bandage pneumatique selon la revendication 1, dans lequel une déformation permanente en traction d'un caoutchouc de revêtement de la couche de renforcement d'armature est de 3,0% ou inférieur.

3. Bandage pneumatique selon la revendication 2, dans lequel le caoutchouc de revêtement pour la couche de renforcement d'armature comprend: au moins un ingrédient de caoutchouc sélectionné dans le groupe consistant en caoutchouc naturel, caoutchouc isoprène, caoutchouc styrène butadienne et caoutchoucs butadiène; soufre de 2,0 phr à 5,0 phr inclus; et noir de carbone de 40 phr à 80 phr inclus.

4. Bandage pneumatique selon la revendication 3, dans lequel le nombre d'absorption d'iode du noir de carbone est de 20 g/kg à 100 g/kg inclus.

**5.** Bandage pneumatique selon la revendication 3, dans lequel le nombre d'absorption DBP du noir de carbone est de 60 x 10$^{-5}$ m$^3$/kg à 140 x 10$^{-5}$ m$^3$/kg inclus.

**6.** Bandage pneumatique selon la revendication 3, où l'air de surface CTAB du noir de carbone est de 30 x 10$^3$ m$^2$/kg à 100 x 10$^3$ m$^2$/kg inclus.

**7.** Bandage pneumatique selon la revendication 1, dans lequel la finesse totale (dtex) de la corde en fibres de polytétraméthylène adipamide est de 940 dtex à 2800 dtex inclus.

**8.** Bandage pneumatique selon l'une quelconque des revendications 1 à 7, dans lequel
le coefficient de torsion k de la corde en fibres de polytétraméthylène adipamide satisfait à une condition de 700 ≤ K ≤1100, et concouramment,
le nombre de decitex total de la corde en fibres de polytétraméthylène adipamide inclus dans chaque largeur de 50 mm de la couche de renforcement d'armature est de 80000 à 150000 inclus.

# Fig.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6024208 A
- JP 3287402 A
- JP 61129303 A
- JP HEI5286304 B
- EP 1495880 A